# EUROPEAN PATENT APPLICATION

(11) **EP 4 332 064 A1**
(43) Date of publication of application: **06.03.2024**
(21) Application number: 22795310.6
(22) Date of filing: 10.03.2022
(51) Int. Cl.: C01G 33/00, H01M 4/36, H01M 4/505, H01M 4/525, H01M 4/58

(54) **LITHIUM NIOBATE SOLUTION AND METHOD FOR PRODUCING SAME**

(30) Priority: 28.04.2021 JP 2021075470
(71) Applicant: Mitsui Mining & Smelting Co., Ltd, Shinagawa-ku Tokyo 141-8584 (JP)
(72) Inventor: MOTONO, Ryuji, Omuta-shi, Fukuoka 836-0003 (JP); HARA, Syuhei, Omuta-shi, Fukuoka 836-0003 (JP); ARAKAWA, Daiki, Omuta-shi, Fukuoka 836-0003 (JP)
(74) Representative: Novagraaf Technologies
(86) International application number: PCT/JP2022/010677
(87) International publication number: WO 2022/230387

(57) **Abstract**

The lithium niobate solution of the invention is a lithium niobate solution containing lithium niobate having a molar ratio of lithium and niobium Li/Nb of 0.8 or more and 2.0 or less and ammonium ions, and the particle size (D50) of the lithium niobate in the lithium niobate solution according to dynamic light scattering is 100 nm or less. Moreover, the method for producing a lithium niobate solution of the invention has a step of producing an acidic niobium solution containing niobium, a step of obtaining a precipitate slurry containing niobium by inverse neutralization by adding the acidic niobium solution to ammonia water and a step of obtaining a lithium niobate solution by maintaining a mixture of the precipitate slurry containing niobium and lithium hydroxide at 20°C to 100°C with stirring.

## Description

### Technical Field

The present invention relates to a lithium niobate solution and a production method thereof.

### Background Art

Single crystals of lithium niobate are used as a nonlinear optical material, and PTL 1 discloses a technique for reducing the interface resistance caused between the cathode and the electrolyte of a lithium-ion secondary cell by coating the surface of cathode active material particles of the lithium-ion secondary cell with a solution thereof. To the aqueous precursor solution of lithium niobate disclosed in PTL 1, hydrogen peroxide solution is added to improve the storage stability.

### Citation List

### Patent Literature

PTL 1: JP2020-66570A

### Summary of Invention

### Technical Problem

PTL 1, however, discloses the following points of attention regarding the aqueous precursor solution of lithium niobate to which hydrogen peroxide solution has been added. PTL 1 discloses: the produced polyacid of niobium is degraded by reaction with hydroxide ions when the concentration of the hydrogen peroxide solution is less than 0.1 mol based on 1 mol of niobium; it is difficult to maintain the stability of the aqueous precursor solution when free hydrogen peroxide in the aqueous precursor solution of lithium niobate is less than 0.01% by mass; and a part of solubilized niobic acid may form an unstable peroxo complex when hydrogen peroxide is contained in the aqueous precursor solution of lithium niobate.

In view of the problems, the invention provides a lithium niobate solution having high dispersibility in water, excellent solubility in water and excellent storage stability and a production method thereof.

### Solution to Problem

The lithium niobate solution of the invention, which has been made to solve the problems, is a lithium niobate solution containing lithium niobate having a molar ratio of lithium and niobium Li/Nb of 0.8 or more and 2.0 or less and ammonium ions and is characterized in that the particle size (D50) of lithium niobate in the lithium niobate solution according to dynamic light scattering is 100 nm or less.

The stability of the lithium niobate solution of the invention improves, that is the precipitation of a precipitate of the solution can be suppressed for example, when the molar ratio of lithium and niobium Li/Nb of lithium niobate (LiNbO₃) in the lithium niobate solution is 0.8 or more and 2.0 or less. Moreover, the molar ratio of lithium and niobium Li/Nb in the lithium niobate solution is more preferably 0.9 or more and 1.5 or less, further preferably 0.9 or more and 1.2 or less.

Here, the lithium niobate in the lithium niobate solution of the invention is speculated to exist in the solution as ions in which niobic acid and lithium are bonded by ionic bond. Because the lithium niobate solution of the invention contains hydroxide ions as anions but contains little halide ions such as fluoride ions and chloride ions and because lithium is believed to exist as cations, niobium is believed to exist as an anion such as NbO₃⁻ or polyoxometalate (polyacid) ions in which several niobium atoms and oxygen atom are bonded.

Moreover, the lithium niobate solution of the invention contains ammonium ions in addition to lithium niobate. Although the details are explained in the method for producing a lithium niobate solution of the invention described below, because the lithium niobate solution of the invention is produced after producing a water-containing ammonium niobate cake, which is a precipitate slurry containing niobium, by inverse neutralization by adding an acidic niobium solution to ammonia water in the production steps, it is believed that lithium ions and substituted ammonium ions are contained in the solution as cations.

The methods for measuring the ammonium ion concentration of the solution include a method for quantifying the ammonium ion concentration with an ion meter after adding sodium hydroxide to the solution and separating ammonia by distillation, a method for quantifying the N₂ content in the sample in a gas form with a thermal conductivity meter, the Kjeldahl method, gas chromatography (GC), ion chromatography, GC-MS (mass spectroscopy) and the like.

The ammonium ion concentration of the ammonium ions contained in the lithium niobate solution of the invention is preferably 0.001% by mass or more and 25% by mass or less, more preferably 0.5% by mass or more and 10% by mass or less, further preferably 1% by mass or more and 8% by mass or less.

Furthermore, the particle size (D50) of lithium niobate in the lithium niobate solution according to dynamic light scattering is preferably 100 nm or less because the dispersibility is high. Moreover, the particle size (D50) of lithium niobate in the lithium niobate solution is preferably smaller because the change with time is small, resulting in stability, and because excellent film formation without any uncoated part during film formation and a sufficient coating weight can be secured. The particle size (D50) of lithium niobate in the lithium niobate solution is more preferably 80 nm or less, further preferably 50 nm or less, particularly preferably 30 nm or less, more particularly preferably 20 nm or less, further particularly preferably 10 nm or less, still particularly preferably 5 nm or less, still further particularly preferably 3 nm or less. In this manner, a solution in which the particle size (D50) of lithium niobate is 100 nm or less as a result of measurement of the particle size (D50) of lithium niobate in the lithium niobate solution of the invention using dynamic light scattering is the "lithium niobate solution" of the invention.

Here, dynamic light scattering is a method in which a solution such as a suspension is irradiated with light such as laser beam to measure the light scattering intensity from the particle groups in Brownian motion and the particle size and the distribution are determined from the change in the intensity with time. Specifically, the method for evaluating the particle size distribution is conducted using a Zeta-potential/particle size/molecular weight analysis system (manufactured by Otsuka Electronics Co., Ltd.: ELSZ-2000) in accordance with JIS Z 8828:2019, "Particle size analysis-Dynamic light scattering". In this regard, to remove dust and the like in the solution as the subject of measurement just before the measurement, the solution is filtered through a filter having a pore size of 2 µm and is subjected to ultrasonic treatment at 28 kHz for three minutes with an ultrasonic cleaner (manufactured by AS ONE Corporation: VS-100III). Here, the particle size (D50) refers to the median size (D50), which is the particle size showing the 50% integrated value of the cumulative distribution curve.

The "solution" in the invention is not limited to those in which the solute is dispersed or mixed in a solvent in the state of single molecules but includes those in which aggregates in which molecules are pulled by intermolecular interaction, such as (1) multimer molecules, (2) solvate molecules, (3) molecular clusters and (4) colloidal particles, are dispersed in a solvent.

Moreover, regarding the lithium niobate solution of the invention, hydrogen peroxide is preferably not contained in the lithium niobate solution.

In general, when niobium oxide exists in a solution as polyacid ions, the stability is improved by adding hydrogen peroxide to suppress degradation by reaction with hydroxide ions. In the lithium niobate solution of the invention, however, because ammonium ions exist in the solution, long-term stability can be secured even in the absence of hydrogen peroxide.

Regarding the method for detecting hydrogen peroxide in the solution, for example, it can be determined that hydrogen peroxide is not contained in the solution by measuring the relative intensity of absorbance to that of a standard solution of hydrogen peroxide using the standard addition method. Specifically, from each of the ultraviolet-visible absorption spectra of a standard solution containing hydrogen peroxide at a known concentration, such as 1% by mass, and a standard solution without addition of hydrogen peroxide, the wavelength range in which a change in absorbance due to peroxo complex formation is observed is determined. When the difference in absorbance between the standard solution without addition of hydrogen peroxide and a sample with an unknown hydrogen peroxide concentration is less than 1% in the wavelength range, it can be determined that the sample with an unknown hydrogen peroxide concentration does not substantially contain hydrogen peroxide. Because hydrogen peroxide reacts with polyacid of niobium and forms a peroxo complex when hydrogen peroxide is contained in the solution, by observing the difference in absorbance from that of the standard solution without addition of hydrogen peroxide as described above, it can be determined that hydrogen peroxide is not contained in the solution. Moreover, in addition to the standard addition method described above, the qualitative analysis and the quantitative analysis of hydrogen peroxide in the solution may be conducted, for example, by a method using a commercial hydrogen peroxide analysis kit by adding a reagent which causes color reaction with hydrogen peroxide to the solution and measuring the color development or by adding a reagent which causes fluorescent reaction with hydrogen peroxide to the solution and measuring the color development.

Regarding the lithium niobate solution of the invention, the lithium niobate solution is preferably an aqueous solution.

Because the lithium niobate in the lithium niobate solution of the invention has high dispersibility in water and excellent solubility in water, pure water can be used as the solvent.

The lithium niobate solution of the invention is characterized in that the lithium niobate concentration of the lithium niobate solution is 0.1 to 30% by mass. Moreover, the lithium niobate solution of the invention is characterized in that the lithium niobate concentration of the lithium niobate solution is 5 to 20% by mass.

The lithium niobate concentration of the lithium niobate solution is preferably 0.1 to 30% by mass because both the practicality and the stability of the lithium niobate solution can be obtained, and the concentration is more preferably 1 to 25% by mass, still further preferably 3 to 21% by mass, particularly preferably 5 to 20% by mass.

Here, the lithium niobate concentration of the lithium niobate solution is calculated by diluting the solution appropriately with dilute hydrochloric acid as needed and measuring the Nb weight fraction in terms of niobium oxide (Nb₂O₅) and the Li weight fraction using ICP emission analysis (manufactured by Agilent Technologies, Inc.: AG-5110) in accordance with JIS K0116:2014. Here, niobic acid in the lithium niobate solution of the invention does not necessarily exist in the form of Nb₂O₅. The niobic acid content is indicated in terms of Nb₂O₅ following the customs for indicating the niobium concentration.

The lithium niobate solution of the invention can be for coating a cathode or a cathode material for a lithium-ion secondary cell, or for coating a cathode or a cathode material for a solid-state lithium-ion battery.

Regarding the lithium niobate solution of the invention, from the results of a stability test over time for visually observing the state of the solution after leaving still in an incubator set at room temperature (25°C) for a month and measurement of the particle size (D50) over time of the lithium niobate particles in the solution by dynamic light scattering, as well as the results of a film formability test for applying to a glass substrate as a replacement for a collector plate of a cathode for a lithium-ion secondary cell and observing the state of the film with an optical microscope and a safety test for mixing the solution in a cathode active material and visually observing the presence or the absence of foaming, the lithium niobate solution of the invention is suitable for coating a cathode or a cathode material for a lithium-ion secondary cell.

The cathode active material for a lithium-ion secondary cell of the invention is characterized in that the surface is coated with lithium niobate contained in the lithium niobate solution.

Through observation of coating in which the coating state on the particle surface of the cathode active material for a lithium-ion secondary cell by the lithium niobate solution of the invention is observed with a scanning electron microscope, it can be determined that the surface of the cathode active material is coated with lithium niobate. The coating amount of lithium niobate coating the surface of the cathode active material for a lithium-ion secondary cell of the invention can be calculated by dissolving the cathode active material for a lithium-ion secondary cell in an adequate amount of hydrofluoric acid and measuring the niobium weight fraction concentration of the lithium niobate coating the particle surface of the cathode active material using ICP emission analysis (manufactured by Agilent Technologies, Inc.: AG-5110) in accordance with JIS K0116:2014. The niobium weight fraction concentration is preferably 1 or more, more preferably more than 1, further preferably 1.1 or more, particularly preferably 1.2 or more.

Furthermore, the lithium niobate solution of the invention may contain a component other than the components derived from lithium niobate and the components derived from ammonia (called "other component") within the range in which the effects are not inhibited. Examples of the other component include Na, Mg, Si, K, Ca, Ti, Mn, Ni, Zn, Sr, Zr, Ta, Mo, Ba, W. The other component, however, is not limited to the examples. The other component content of the lithium niobate solution of the invention is preferably less than 5% by mass, more preferably less than 4% by mass, further preferably less than 3% by mass. It is supposed that the lithium niobate solution of the invention contains inevitable impurities which are not intended. The inevitable impurity content is preferably less than 0.01% by mass.

In addition, the lithium-ion secondary cell of the invention is characterized by having a cathode coated with the cathode active material.

Because the cathode active material coated with the lithium niobate solution of the invention is suitable for coating the surface of a cathode for a lithium-ion secondary cell as described above, by coating the surface of a cathode with the cathode active material coated with the lithium niobate solution of the invention, the properties as a lithium-ion secondary cell can be improved.

The method for producing the lithium niobate solution of the invention described above is explained below.

The method for producing the lithium niobate solution of the invention has a step of producing an acidic niobium solution containing niobium, a step of obtaining a precipitate slurry containing niobium by inverse neutralization by adding the acidic niobium solution to ammonia water and a step of obtaining a lithium niobate solution by maintaining a mixture of the obtained precipitate slurry containing niobium, lithium hydroxide and pure water at 20°C to 100°C with stirring.

First, in the step of producing an acidic niobium solution containing niobium, the acidic niobium solution refers to an acidic niobium solution containing fluoride ions obtained by solvent extraction of a solution in which niobium is dissolved in an acidic solution containing hydrofluoric acid. Note that the niobium referred to in the present specification also includes a niobic acid compound unless otherwise specifically explained.

Here, the acidic niobium solution containing fluoride ions, such as an aqueous niobium fluoride solution, is preferably adjusted by adding water (for example, pure water) in such a manner that 1 to 100 g/L of niobium in terms of Nb₂O₅ is contained. Here, the niobium concentration is preferably 1 g/L or more in terms of Nb₂O₅ because a niobic acid compound hydrate which easily dissolves in water is obtained, and considering the productivity, the concentration is more preferably 10 g/L or more, further preferably 20 g/L or more. On the other hand, the niobium concentration is preferably 100 g/L or less in terms of Nb₂O₅ because a niobic acid compound hydrate which easily dissolves in water is obtained, and to synthesize a niobic acid compound hydrate which easily dissolves in water more certainly, the concentration is more preferably 90 g/L or less, further preferably 80 g/L or less, particularly preferably 70 g/L or less. Here, the pH of the aqueous niobium fluoride solution is preferably 2 or less to completely dissolve niobium or niobium oxide, more preferably 1 or less.

Next, in the step of obtaining a precipitate slurry containing niobium by inverse neutralization by adding the acidic niobium solution to ammonia water (hereinafter, referred to the inverse neutralization step), a precipitate slurry containing niobium is preferably obtained by adding the acidic niobium solution containing fluoride ions to ammonia water with a certain concentration, namely, by inverse neutralization.

The ammonia concentration of the ammonia water used for inverse neutralization is preferably 10% by mass to 30% by mass. When the ammonia concentration is 10% by mass, niobium is less likely to remain undissolved, and niobium or niobic acid can be completely dissolved in water. On the other hand, the ammonia concentration is preferably 30% by mass or less because this is close to a saturated aqueous solution of ammonia.

From the above points, the ammonia concentration of the ammonia water is preferably 10% by mass or more, more preferably 15% by mass or more, further preferably 20% by mass or more, particularly preferably 25% by mass. On the other hand, the ammonia concentration is preferably 30% by mass or less, more preferably 29% by mass or less, further preferably 28% by mass or less.

In the inverse neutralization step, the amount of the aqueous niobium fluoride solution added to ammonia water is in such a manner that the molar ratio of NH₃/Nb₂O₅ becomes preferably 95 or more and 500 or less, more preferably 100 or more and 450 or less, further preferably 110 or more and 400 or less. Moreover, the amount of the aqueous niobium fluoride solution added to ammonia water is in such a manner that the molar ratio of NH₃/HF becomes preferably 3.0 or more, more preferably 4.0 or more, further preferably 5.0 or more, because a niobic acid compound which dissolves in an amine or thin ammonia water is produced. On the other hand, to reduce the costs, the molar ratio of NH₃/HF is preferably 100 or less, more preferably 50 or more, further preferably 40 or more.

In the inverse neutralization step, the period related to the addition of the aqueous niobium fluoride solution to ammonia water is preferably within one minute, more preferably within 30 seconds, further preferably within 10 seconds. That is, rather than gradually adding the aqueous niobium fluoride solution over a time, it is suitable to add to ammonia water in as short a time as possible, for example by adding at once or the like, to conduct neutralization reaction. Moreover, in the inverse neutralization step, because the aqueous niobium fluoride solution, which is acidic, is added to ammonia water, which is alkaline, neutralization reaction can be conducted while maintaining high pH. Here, the aqueous niobium fluoride solution and ammonia water can be used at normal temperature.

Furthermore the method for producing the lithium niobate solution of the invention has a step of obtaining a niobium-containing precipitate from which fluoride ions have been removed by removing fluoride ions from the precipitate slurry containing niobium obtained by inverse neutralization. The precipitate slurry containing niobium obtained by inverse neutralization contains a fluorine compound such as ammonium fluoride as impurities, and these are preferably removed.

The method for removing the fluorine compound may be any method, but for example, a method by filtration using a membrane such as reverse osmosis filtration using ammonia water or pure water, ultrafiltration and microfiltration, centrifugation or another known method can be adopted. Note that when fluoride ions are removed from the precipitate slurry containing niobium, temperature control is not particularly required, and the removal may be conducted at normal temperature.

Specifically, by decantation of the precipitate slurry containing niobium obtained by inverse neutralization using a centrifuge and repeating washing until the free fluoride ion amount becomes 100 mg/L or less, a niobium-containing precipitate from which fluoride ions have been removed can be obtained.

The wash solution used for removing fluoride ions is suitably ammonia water. Specifically, ammonia water of 5.0% by mass or less is preferable, and ammonia water of 4.0% by mass or less is more preferable. Ammonia water of 3.0% by mass or less is further preferable, and ammonia water of 2.5% by mass is particularly preferable. Ammonia water of 5.0% by mass or less can avoid an unnecessary increase in the costs because ammonia and ammonium ions are suitable based on fluorine.

In this manner, by diluting obtained niobium-containing precipitate from which fluoride ions have been removed with pure water or the like, a precipitate slurry containing niobium from which fluoride ions have been removed can be obtained. In this regard, regarding the niobium concentration of the precipitate slurry containing niobium, a part of the slurry is taken, dried at 110°C for 24 hours and then sintered at 1,000°C for four hours to produce Nb₂O₅. The weight of thus produced Nb₂O₅ is measured, and the niobium concentration of the slurry can be calculated from the weight.

By maintaining a mixture of the precipitate slurry containing niobium from which fluoride ions have been removed and lithium hydroxide monohydrate at 20°C to 100°C with stirring, the lithium niobate solution of the invention is obtained.

Specifically, by mixing the obtained precipitate slurry containing niobium with lithium hydroxide monohydrate in such a manner that the lithium niobate concentration of the final mixture becomes 0.1 to 30% by mass in terms of Nb₂O₅ and that the molar ratio of lithium and niobium Li/Nb becomes 0.8 or more and 2.0 or less, a semitransparent white slurry is obtained. By maintaining the semitransparent white slurry at a liquid temperature of 50°C to 100°C (for example, 70°C) with stirring for an hour to 24 hours, a colorless transparent lithium niobate solution of the invention is obtained. Also, pure water or an aqueous alkaline solution such as ammonia water may be added to and mixed in the mixture of the precipitate slurry containing niobium and lithium hydroxide monohydrate. The ammonia concentration of ammonia water added to the mixture may be any concentration. For example, the concentration may be 0.1% by mass or more and 30% by mass or less and may be 10% by mass or more and 25% by mass or less.

Furthermore, the obtained lithium niobate solution is left to cool to room temperature. In this regard, by drying the lithium niobate solution of the invention, lithium niobate powder can be obtained.

The pH of the lithium niobate solution of the invention obtained by the production method described above is preferably 9 or more because the lithium niobate solution is stabilized. Furthermore, the pH of the lithium niobate solution of the invention is more preferably 10 or more, further preferably 10.5 or more, particularly preferably 11 or more.

Further, the method for producing a cathode active material for a lithium-ion secondary cell coated with the lithium niobate solution of the invention described above is explained below.

The method for producing a cathode active material for a lithium-ion secondary cell coated with the lithium niobate solution is characterized by having a step of producing a cathode active material slurry for a cell containing lithium niobate by mixing the lithium niobate solution, a cathode active material and an aqueous lithium hydroxide solution and a step of drying the cathode active material slurry for a cell containing lithium niobate.

First, by adding a cathode active material for a cell, such as LiMn₂O₄ (manufactured by Merck KGaA: spinel type, particle size < 0.5 pm), to an aqueous lithium niobate solution obtained by diluting the lithium niobate solution of the invention with pure water, a slurry containing lithium niobate is obtained. Then, by adding an aqueous lithium hydroxide solution dropwise while stirring the slurry containing lithium niobate and maintaining for 10 minutes at 90°C, a cathode active material slurry for a cell containing lithium niobate is produced.

As the cathode active material for a cell or the like, in addition to LiMn₂O₄ cited above, LiCoO₂, LiNiO₂, LiFeO₂, Li₂MnO₃, LiFePO₄, LiCoPO₄, LiNiPO₄, LiMnPO₄, LiNi_{0.5}Mn_{1.5}O₄, LiMn_{1/3}Co_{1/3}Ni_{1/3}O₂, LiCo_{0.3}Ni_{0.4}Mn_{0.4}O₂, lithium molybdate, LiMnO₄, LiNi_{0.8}Co_{0.15}Al_{0.05}O₂ and LiMnO₂ can be used.

Next, by drying the cathode active material slurry for a cell containing lithium niobate in an air-drying furnace maintained at an internal temperature of 110°C for 15 hours, a cathode active material for a lithium-ion secondary cell coated with lithium niobate can be produced.

In the method for producing a cathode active material for a lithium-ion secondary cell described above, the cathode active material for a cell is added, but a change may be appropriately made depending on the application. For example, a dispersing agent, a pH-adjusting agent, a coloring agent, a thickener, a wetting agent, a binder resin or the like may be added.

### Advantageous Effects of Invention

The lithium niobate solution of the invention has high dispersibility in water, excellent solubility in water and excellent storage stability.

### Description of Embodiments

The lithium niobate solution of an embodiment according to the invention is further explained below by the following Examples. The following Examples, however, do not limit the invention.

### (Example 1)

By dissolving 100 g of niobium pentoxide in 200 g of a 55% aqueous hydrofluoric acid solution and adding 830 mL of ion-exchanged water, an aqueous niobium fluoride solution containing 100 g/L of niobium in terms of Nb₂O₅ (Nb₃O₅=8.84% by mass) was obtained. The aqueous niobium fluoride solution in a volume of 200 mL was added to 1 L of ammonia water (NH₃ concentration of 25% by mass) in a time shorter than one minute (NH₃/Nb₂O₅ molar ratio=177.9, NH₃/HF molar ratio=12.2), and thus a reaction solution (pH 11) was obtained. The reaction solution was a slurry of a niobic acid compound hydrate, namely a slurry of a niobium-containing precipitate.

Next, the reaction solution was decanted using a centrifuge and washed until the free fluoride ion amount became 100 mg/L or less, and thus a niobium-containing precipitate from which fluoride ions were removed was obtained. Here, ammonia water was used as the wash solution.

Furthermore, the niobium-containing precipitate from which fluoride ions were removed was diluted with pure water, and thus a slurry was obtained. A part of the slurry was dried at 110°C for 24 hours and then sintered at 1,000°C for four hours to produce Nb₂O₅, and the concentration of Nb₂O₅ contained in the slurry was calculated from the weight.

Then, the slurry of the niobium-containing precipitate that was diluted with pure water was mixed with lithium hydroxide monohydrate and pure water in such a manner that the niobium concentration of the final mixture became 1% by mass in terms of Nb₂O₅ and that the molar ratio of Li/Nb became 1, and thus a semitransparent slurry mixture was obtained. The mixture was maintained at a liquid temperature of 50°C to 100°C, for example 70°C, with stirring for an hour, and then an aqueous colorless transparent lithium niobate solution according to Example 1 was obtained. The pH of the obtained aqueous lithium niobate solution according to Example 1 was 11.

### (Example 2)

In Example 2, a production method similar to that in Example 1 was conducted, except that the niobium concentration of the semitransparent slurry mixture was 5% by mass in terms of Nb₂O₅, and an aqueous colorless transparent lithium niobate solution according to Example 2 was obtained. The pH of the obtained aqueous lithium niobate solution according to Example 2 was 11.

### (Example 3)

In Example 3, a production method similar to that in Example 1 was conducted, except that the niobium concentration of the semitransparent slurry mixture was 10% by mass in terms of Nb₂O₅, and an aqueous colorless transparent lithium niobate solution according to Example 3 was obtained. The pH of the obtained aqueous lithium niobate solution according to Example 3 was 11.

### (Example 4)

In Example 4, a production method similar to that in Example 1 was conducted, except that the niobium concentration of the semitransparent slurry mixture was 20% by mass in terms of Nb₂O₅, and an aqueous colorless transparent lithium niobate solution according to Example 4 was obtained. The pH of the obtained aqueous lithium niobate solution according to Example 4 was 11.

### (Example 5)

In Example 5, a production method similar to that in Example 1 was conducted, except that the niobium concentration of the semitransparent slurry mixture was 10% by mass in terms of Nb₂O₅ and that the molar ratio of Li/Nb was 2, and an aqueous colorless transparent lithium niobate solution according to Example 5 was obtained. The pH of the obtained aqueous lithium niobate solution according to Example 5 was 11.

### (Example 6)

In Example 6, a production method similar to that in Example 1 was conducted, except that the niobium concentration of the semitransparent slurry mixture was 10% by mass in terms of Nb₂O₅ and that the molar ratio of Li/Nb was 0.9, and an aqueous colorless transparent lithium niobate solution according to Example 6 was obtained. The pH of the obtained aqueous lithium niobate solution according to Example 6 was 11.

### (Example 7)

In Example 7, the semitransparent slurry mixture obtained in Example 1 was heated to 70°C with a water bath, maintained for two hours with stirring and then cooled to room temperature. To replenish the water evaporated by the heating, pure water was added, and the concentration was adjusted in such a manner that the niobium concentration of the colorless transparent slurry mixture became 5% by mass in terms of Nb₂O₅. Thus, an aqueous colorless transparent lithium niobate solution according to Example 7 was obtained. The pH of the obtained aqueous lithium niobate solution according to Example 7 was 11.

### (Example 8)

In Example 8, the semitransparent slurry mixture obtained in Example 1 was heated to 70°C with a water bath, maintained for six hours with stirring and then cooled to room temperature. To replenish the water evaporated by the heating, pure water was added, and the concentration was adjusted in such a manner that the niobium concentration of the colorless transparent slurry mixture became 5% by mass in terms of Nb₂O₅. Thus, an aqueous colorless transparent lithium niobate solution according to Example 8 was obtained. The pH of the obtained aqueous lithium niobate solution according to Example 8 was 11.

### (Example 9)

In Example 9, the semitransparent slurry mixture obtained in Example 1 was heated to 70°C with a water bath, maintained for 25 hours with stirring and then cooled to room temperature. To replenish the water evaporated by the heating, pure water was added, and the concentration was adjusted in such a manner that the niobium concentration of the colorless transparent slurry mixture became 5% by mass in terms of Nb₂O₅. Thus, an aqueous colorless transparent lithium niobate solution according to Example 9 was obtained. The pH of the obtained aqueous lithium niobate solution according to Example 9 was 11.

### (Example 10)

In Example 10, a production method similar to that in Example 1 was conducted, except that a part of pure water was replaced with ammonia water (NH₃ concentration of 25% by mass) when the slurry of the niobium-containing precipitate according to Example 1, lithium hydroxide monohydrate and pure water were mixed in such a manner that the niobium concentration of the semitransparent slurry mixture became 5% by mass in terms of Nb₂O₅ and that the NH₃ concentration became 5.5% by mass, and an aqueous colorless transparent lithium niobate solution according to Example 10 was obtained. The pH of the obtained aqueous lithium niobate solution according to Example 10 was 11.

### (Example 11)

In Example 11, a production method similar to that in Example 1 was conducted, except that a part of pure water was replaced with ammonia water (NH₃ concentration of 25% by mass) when the slurry of the niobium-containing precipitate according to Example 1, lithium hydroxide monohydrate and pure water were mixed in such a manner that the niobium concentration of the semitransparent slurry mixture became 5% by mass in terms of Nb₂O₅ and that the NH₃ concentration became 10% by mass, and an aqueous colorless transparent lithium niobate solution according to Example 11 was obtained. The pH of the obtained aqueous lithium niobate solution according to Example 11 was 11.

### (Example 12)

In Example 12, the semitransparent slurry mixture obtained in Example 1 was heated to 70°C with a water bath, maintained for six hours with stirring and then cooled to room temperature. To replenish the water evaporated by the heating, pure water was added, and the concentration was adjusted in such a manner that the niobium concentration of the colorless transparent slurry mixture became 10% by mass in terms of Nb₂O₅. Thus, an aqueous colorless transparent lithium niobate solution according to Example 12 was obtained. The pH of the obtained aqueous lithium niobate solution according to Example 12 was 11.

### (Example 13)

In Example 13, a production method similar to that in Example 1 was conducted, except that a part of pure water was replaced with ammonia water (NH₃ concentration of 25% by mass) when the slurry of the niobium-containing precipitate according to Example 1, lithium hydroxide monohydrate and pure water were mixed in such a manner that the niobium concentration of the semitransparent slurry mixture became 10% by mass in terms of Nb₂O₅ and that the NH₃ concentration became 8.2% by mass, and an aqueous colorless transparent lithium niobate solution according to Example 13 was obtained. The pH of the obtained aqueous lithium niobate solution according to Example 13 was 11.

### (Comparative Example 1)

In Comparative Example 1, 35% hydrogen peroxide solution was added to the aqueous colorless transparent lithium niobate solution according to Example 1 in such a manner that the molar ratio of H₂O₂/Nb became 0.3, and an aqueous lithium niobate solution according to Comparative Example 1 was obtained. The pH of the obtained aqueous lithium niobate solution according to Comparative Example 1 was 11.

### (Comparative Example 2)

In Comparative Example 2, 35% hydrogen peroxide solution was added to the aqueous colorless transparent lithium niobate solution according to Example 1 in such a manner that the molar ratio of H₂O₂/Nb became 1, and an aqueous lithium niobate solution according to Comparative Example 2 was obtained. The pH of the obtained aqueous lithium niobate solution according to Comparative Example 2 was 8.

### (Comparative Example 3)

In Comparative Example 3, the aqueous niobium fluoride solution described above was slowly added to 500 mL of a 1% aqueous lithium hydroxide solution, and a microparticle dispersion having an Nb₂O₅ content of 5% by mass and a molar ratio of Li/Nb of 1 was obtained. Then, the microparticle dispersion was washed by filtration using an ultrafiltration device until the free fluoride ion amount became 100 mg/L, and a lithium niobate sol according to Comparative Example 3 was obtained. The pH of the obtained lithium niobate sol according to Comparative Example 3 was 8.6.

### (Comparative Example 4)

In Comparative Example 4, the semitransparent slurry mixture obtained in Example 1 was heated to 70°C with a water bath, maintained for 73 hours with stirring and then cooled to room temperature. It was observed that a precipitate was generated by the heating for 73 hours. To replenish the water evaporated by the heating, pure water was added, and the concentration was adjusted in such a manner that the niobium concentration of the slurry mixture became 5% by mass in terms of Nb₂O₅. Thus, an aqueous lithium niobate solution according to Comparative Example 4 was obtained. The pH of the obtained aqueous lithium niobate solution according to Comparative Example 4 was 11.

The physical properties below of the aqueous lithium niobate solutions obtained in Examples 1 to 13 and Comparative Examples 1, 2 and 4 and the lithium niobate sol of Comparative Example 3 were measured. The physical property values measured and the methods for measuring the physical property values are shown below, and the measurement results are shown in Table 1.

### <Elementary Analysis>

A sample was appropriately diluted with dilute hydrochloric acid as needed, and the Nb weight fraction in terms of Nb₂O₅ and the Li weight fraction were measured using ICP emission analysis (manufactured by Agilent Technologies, Inc.: AG-5110) in accordance with JIS K0116:2014.

### <Quantitative Analysis of Ammonia>

A sodium hydroxide solution (30 g/100 ml) in a volume of 25 ml was added to 1 to 5 ml of a sample solution. The mixture solution was boiled and distilled, and the distillate (about 200 ml) was discharged into a vessel containing 20 ml of pure water and 0.5 ml of sulfuric acid to separate ammonia. Next, the separated ammonia was transferred to a 250-ml measuring flask, and the volume was adjusted to 250 ml with pure water. Furthermore, 10 ml of the solution which was adjusted to a volume of 250 ml was taken into a 100-ml measuring flask, and 1 ml of a sodium hydroxide solution (30 g/100 mL) was added to the solution taken. The volume was adjusted to 100 ml with pure water. Through quantitative analysis of thus obtained solution using an ion meter (body: HORITA F-53, electrode: HORIBA 500 2A), the concentration (% by mass) of ammonium ions contained in the solution was measured.

### <Qualitative Analysis of Hydrogen Peroxide>

The ultraviolet-visible absorption spectra of a standard solution without addition of hydrogen peroxide and a standard solution to which hydrogen peroxide was added at 1% by mass in terms of H₂O₂ were measured, and the wavelength at which the change rate of absorbance was the largest was regarded as "λ". Next, the absorbance of a sample with an unknown hydrogen peroxide concentration at the wavelength λ was similarly measured. When the ratio of the absorbance of the sample with an unknown hydrogen peroxide concentration at the wavelength λ and the absorbance of the standard solution without addition of hydrogen peroxide at the wavelength λ was 1% or less, it was determined that hydrogen peroxide was not added to the sample.

The measurement conditions of the ultraviolet-visible absorption spectra may be as follows.
Apparatus: UH4150-type spectrophotometer (manufactured by Hitachi High-Tech Science Corporation)
· Measurement Mode: wavelength scan
· Data Mode: %T (transmission)
· Measurement Wavelength Range: 200 to 2,600 nm
· Scanning Speed: 600 nm/min
· Sampling Distance: 2 nm

### <Dynamic Light Scattering>

The particle size distribution was evaluated using a Zeta-potential/particle size/molecular weight analysis system (manufactured by Otsuka Electronics Co., Ltd.: ELSZ-2000) in accordance with JIS Z 8828:2019, "Particle size analysis-Dynamic light scattering". To remove dust and the like in the solution as the subject of measurement just before the measurement, the solution was filtered through a filter having a pore size of 2 µm and was subjected to ultrasonic treatment at 28 kHz for three minutes with an ultrasonic cleaner (manufactured by AS ONE Corporation: VS-100III). Here, the particle size (D50) refers to the median size (D50), which is the particle size showing the 50% integrated value of the cumulative distribution curve. The "initial particle size D50 (nm)" in Table 1 refers to the particle size (D50) of lithium niobate in the aqueous lithium niobate solution immediately after the production. The "particle size D50 (nm) after time" in Table 1 refers to the particle size (D50) of lithium niobate in the aqueous lithium niobate solution after leaving in an incubator set at room temperature of 25°C for a month.

### <Stability Test Over Time>

The test was conducted by leaving the aqueous lithium niobate solutions of Examples 1 to 13 and Comparative Examples 1, 2 and 4 and the lithium niobate sol of Comparative Example 3 still in an incubator set at room temperature of 25°C for a month and then visually observing the presence or the absence of white precipitates or gel formation. Those in which no white precipitate and no gel formation were observed were evaluated to be "o" as having stability over time, and those in which one or more white precipitates or gel formation were observed were evaluated to be "×" as not having stability over time. Here, for the determination of gel formation, each of the tantalic acid compound dispersion was put in a plastic vessel, the dispersion which did not drop quickly when the vessel was turned upside down was determined to be a gel. Moreover, the particle sizes (D50) after time of lithium niobate in the aqueous lithium niobate solutions of Examples 1 to 13 and Comparative Examples 1, 2 and 4 and in the lithium niobate sol of Comparative Example 3 after leaving still for a month were measured using dynamic light scattering described above.

### <Film Formability Test>

The test was conducted by evaluating the appearance of a film formed on the surface of a glass substrate as a replacement for a collector plate by observing with an optical microscope. The aqueous lithium niobate solutions of Examples 1 to 13 and Comparative Examples 1, 2 and 4 and the lithium niobate sol of Comparative Example 3 were degreased and washed with acetone using a syringe while filtering through a filter having a pore size of 2 pm, then dropped on dried glass substrates of 50 mm × 50 mm and coated by spin coating (1,500 rpm, 15 seconds). By air drying the coated parts, films were formed on the glass substrates. The glass substrates of the center areas of 15 mm × 15 mm of the formed films were observed with an optical microscope (magnification: ×40). Those in which no bubble, no uneven coating and no crack were observed were evaluated to be "o" as having excellent film formability, and those in which any one or more thereof were observed were evaluated to be "×" as not having excellent film formability.

### <Safety Test>

The presence or the absence of foaming upon addition of the aqueous lithium niobate solutions of Examples 1 to 13 and Comparative Examples 1, 2 and 4 and the lithium niobate sol of Comparative Example 3 to a cathode active material was visually observed and evaluated. The aqueous lithium niobate solutions of Examples 1 to 13 and Comparative Examples 1, 2 and 4 and the lithium niobate sol of Comparative Example 3 in a volume of 50 mL were mixed, at a time, in 5 g of lithium manganese, which is a cathode active material in test vessels, and the presence or the absence of foaming was visually observed. Those in which no bubble was observed were evaluated to be "o" as having safety, and those in which one or more bubbles were observed were evaluated to be "×" as not having safety.

### <Production Method of Cathode Active Material>

The coating of cathode active materials coated with the aqueous lithium niobate solutions of Examples 1 to 13 and Comparative Examples 1, 2 and 4 and the lithium niobate sol of Comparative Example 3 was observed, and the coating amounts were measured. The cathode active materials used for the observation of coating and the measurement of the coating amounts were produced by the following production procedures.

An aqueous lithium niobate solution after leaving still at room temperature of 25°C for a month was diluted with pure water in such a manner that the niobium concentration became 2.3% by mass in terms of Nb₂O₅. When the niobium concentration of the aqueous lithium niobate solution after leaving still for a month was less than 2.3% by mass in terms of Nb₂O₅, the solution was not diluted. A cathode active material (lithium manganese) was added to the diluted aqueous lithium niobate solution in such a manner that the weight ratio of niobium/lithium manganese became 2/100, and thus a cathode active material slurry containing lithium niobate was obtained. Next, 0.4 mol/L of an aqueous lithium hydroxide solution was added dropwise in such a manner that the final molar ratio of Li/Nb became 2 while stirring the obtained cathode active material slurry containing lithium niobate, and the mixture was stirred for 10 minutes in a state in which the liquid temperature was maintained at 90°C. Then, the obtained cathode active material slurry containing lithium niobate was dried in an air-drying furnace at 110°C for 15 hours, and thus a cathode active material coated with lithium niobate was obtained.

### <Observation of Coating>

The coating state of the particle surface of each cathode active material coated with lithium niobate was evaluated by observing with a scanning electron microscope (SEM). Using a scanning electron microscope (SEM), five pieces of SEM images (20 µm × 20 µm) were observed under a condition of an acceleration voltage of 1 kV at a magnification of ×50,000, and the coating state of the particle surface of the cathode active material was observed. Those in which no uncoated part was observed in a 1-pm square on the surface of the particle under the observation conditions described above were evaluated to be "o", and those in which one or more parts were observed were evaluated to be "×".

### <Measurement of Coating Amount>

By adding an appropriate amount of fluoric acid to a cathode active material coated with lithium niobate, a solution in which the lithium niobate that coated the surface of the cathode active material was dissolved was obtained. Regarding the solution, the niobium weight fraction concentration of the solution in which the lithium niobate that coated the surface of the cathode active material was dissolved was measured and calculated using ICP emission analysis (manufactured by Agilent Technologies, Inc.: AG-5110) in accordance with JIS K0116:2014.

**[Table 1]**

| | Identification of Substance | | | | | |
|---|---|---|---|---|---|---|
| | State | Nb₂O₅ (mass%) | Li/Nb Molar Ratio | NH₃ (mass%) | H₂O₂/Nb Molar Ratio | Initial Particle Size D50 (nm) |
| Example 1 | Mixture Solution | 1 | 1.0 | 0.5 | 0.0 | 2.4 |
| Example 2 | Mixture Solution | 5 | 1.0 | 1.3 | 0.0 | 5.0 |
| Example 3 | Mixture Solution | 10 | 1.0 | 2.5 | 0.0 | 7.7 |
| Example 4 | Mixture Solution | 20 | 1.0 | 6.7 | 0.0 | 9.1 |
| Example 5 | Mixture Solution | 10 | 2.0 | 1.8 | 0.0 | 7.0 |
| Example 6 | Mixture Solution | 10 | 0.9 | 2.2 | 0.0 | 6.9 |
| Example 7 | Mixture Solution | 5 | 1.0 | 0.2 | 0.0 | 10.3 |
| Example 8 | Mixture Solution | 5 | 1.0 | 0.006 | 0.0 | 16.8 |
| Example 9 | Mixture Solution | 5 | 1.0 | 0.001 | 0.0 | 18.5 |
| Example 10 | Mixture Solution | 5 | 1.0 | 5.5 | 0.0 | 8.2 |
| Example 11 | Mixture Solution | 5 | 1.0 | 10.0 | 0.0 | 10.3 |
| Example 12 | Mixture Solution | 10 | 1.0 | 0.03 | 0.0 | 18.8 |
| Example 13 | Mixture Solution | 10 | 1.0 | 8.2 | 0.0 | 12.4 |
| Comparative Example 1 | Mixture Solution | 10 | 1.0 | <0.001 | 0.3 | 6.9 |
| Comparative Example 2 | Mixture Solution | 10 | 1.0 | <0.001 | 1.0 | - |
| Comparative Example 3 | Sol | 5 | 1.0 | <0.001 | 0.0 | 132.0 |
| Comparative Example 4 | Mixture Solution | 5 | 1.0 | <0.001 | 0.0 | Precipitate Generation |

| | Evaluation of Solution/Film | | | | Evaluation of Cell | |
|---|---|---|---|---|---|---|
| | Particle Size D50 (nm) after Time | Stability over Time | Film Formability | Safety | Observation of Coating | Coating Amount (mass%) |
| Example 1 | 2.6 | ○ | ○ | ○ | ○ | 1.2 |
| Example 2 | 5.1 | ○ | ○ | ○ | ○ | 1.2 |
| Example 3 | 8.1 | ○ | ○ | ○ | ○ | 1.4 |
| Example 4 | 9.5 | ○ | ○ | ○ | ○ | 1.4 |
| Example 5 | 7.1 | ○ | ○ | ○ | ○ | 1.3 |
| Example 6 | 6.8 | ○ | ○ | ○ | ○ | 1.3 |
| Example 7 | 12.1 | ○ | ○ | ○ | ○ | 1.2 |
| Example 8 | 20.6 | ○ | ○ | ○ | ○ | 1.1 |
| Example 9 | 21.8 | ○ | ○ | ○ | ○ | 1.2 |
| Example 10 | 8.8 | ○ | ○ | ○ | ○ | 1.0 |
| Example 11 | 10.7 | ○ | ○ | ○ | ○ | 1.2 |
| Example 12 | 22.4 | ○ | ○ | ○ | ○ | 1.1 |
| Example 13 | 13.1 | ○ | ○ | ○ | ○ | 1.1 |
| Comparative Example 1 | 1270.0 | × | × | × | × | 1.0 |
| Comparative Example 2 | - | × | × | × | × | 0.9 |
| Comparative Example 3 | 141.0 | ○ | × | ○ | × | 0.4 |
| Comparative Example 4 | Precipitate Generation | × | × | ○ | × | 0.8 |

As shown in Table 1, when the aqueous lithium niobate solutions according to Examples 1 to 13 had molar ratios of lithium and niobium Li/Nb of 0.8 or more and 2.0 or less, and the particle sizes (D50) of lithium niobate in the aqueous solutions according to dynamic light scattering were 100 nm or less, excellent results were obtained for the results in all of the stability test over time, the film formability test and the safety test.

Although the aqueous lithium niobate solutions according to Examples 1 to 13 did not contain hydrogen peroxide in the aqueous solutions, no large difference was observed in the particle sizes (D50) after time of lithium niobate even after a month compared to the initial particle sizes (D50), and the stability over time was excellent. In this regard, the initial particle size (D50) and the particle size (D50) after time of lithium niobate in the aqueous lithium niobate solution according to Comparative Example 2 could not be measured due to gelation. Moreover, generation of a precipitate was observed in the aqueous lithium niobate solution according to Comparative Example 4, and the initial particle size (D50) and the particle size (D50) after time of lithium niobate were not measured.

The aqueous lithium niobate solutions according to Examples 1 to 13 had improved stability during long-term storage when the lithium niobate concentrations of the aqueous solutions were 0.1 to 30% by mass.

As a result of the SEM observation of the coating state of the particle surface of the cathode active materials, it could be observed that the cathode active materials coated with the aqueous lithium niobate solutions according to Examples 1 to 13 were completely coated with the lithium niobate. Moreover, the niobium weight fraction concentrations of the lithium niobate coating the surfaces of the cathode active materials were 1.0% by mass or more. On the other hand, although the niobium weight fraction concentration of the lithium niobate coating the surface of the cathode active material coated with the aqueous lithium niobate solution according to Comparative Example 1 was 1.0% by mass, an uncoated part was observed as a result of the SEM observation of the coating state of the particle surface.

The invention disclosed in the present specification includes, in addition to the features of the inventions and the embodiments, those specified by replacing the partial features with another feature disclosed in the present specification, those specified by adding another feature disclosed in the present specification to the features and those with a broader term specified by deleting the partial features to an extent to achieve a part of the effects, in an applicable range.

### Industrial Applicability

The aqueous lithium niobate solution according to the invention has high dispersibility in water, excellent solubility in water and excellent storage stability and thus is suitable for coating a cathode active material of a lithium-ion secondary cell.

## Claims

1. A lithium niobate solution containing lithium niobate having a molar ratio of lithium and niobium Li/Nb of 0.8 or more and 2.0 or less and ammonium ions
which is **characterized in that** the particle size (D50) of the lithium niobate in the lithium niobate solution according to dynamic light scattering is 100 nm or less.

2. The lithium niobate solution according to claim 1 which is **characterized in that** hydrogen peroxide is not contained in the lithium niobate solution.

3. The lithium niobate solution according to claim 1 or 2 which is **characterized in that** the lithium niobate solution is an aqueous solution.

4. The lithium niobate solution according to any one of claims 1 to 3 which is **characterized in that** the lithium niobate concentration of the lithium niobate solution is 0.1 to 30% by mass.

5. The lithium niobate solution according to any one of claims 1 to 3 which is **characterized in that** the lithium niobate concentration of the lithium niobate solution is 5 to 20% by mass.

6. The lithium niobate solution according to any one of claims 1 to 5 which is **characterized in that** the particle size (D50) of the lithium niobate is 30 nm or less.

7. The lithium niobate solution according to any one of claims 1 to 6 which is **characterized in that** the particle size (D50) of the lithium niobate is 10 nm or less.

8. The lithium niobate solution according to any one of claims 1 to 7 which is **characterized by** being for coating a cathode or a cathode material for a lithium-ion secondary cell.

9. A cathode active material for a lithium-ion secondary cell which is **characterized in that** the surface is coated with the lithium niobate contained in the lithium niobate solution according to any one of claims 1 to 8.

10. A lithium-ion secondary cell **characterized by** having a cathode coated with the cathode active material according to claim 9.

11. A method for producing a lithium niobate solution **characterized by** having
a step of producing an acidic niobium solution containing niobium,
a step of obtaining a precipitate slurry containing the niobium by inverse neutralization by adding the acidic niobium solution to ammonia water and
a step of obtaining a lithium niobate solution by maintaining a mixture of the obtained precipitate slurry containing the niobium and lithium hydroxide at 20°C to 100°C with stirring.

12. The method for producing a lithium niobate solution according to claim 11 which is **characterized in that**
the acidic niobium solution is an acidic niobium solution containing fluoride ions obtained by solvent extraction of a solution in which niobium is dissolved in an acidic solution containing hydrofluoric acid and
that the method has a step of obtaining a niobium-containing precipitate by removing fluoride ions from the precipitate slurry containing the niobium,
a step of obtaining a lithium niobate solution by maintaining a mixture of the obtained niobium-containing precipitate and lithium hydroxide at 20°C to 100°C with stirring and
a step of leaving the lithium niobate solution to cool to room temperature.

13. A method for producing a cathode active material for a lithium-ion secondary cell coated with lithium niobate which is **characterized by** having
a step of producing a cathode active material slurry for a cell containing lithium niobate by mixing the lithium niobate solution according to any one of claims 1 to 7, a cathode active material and an aqueous lithium hydroxide solution and
a step of drying the cathode active material slurry for a cell containing the lithium niobate.
